Europäisches Patentamt

European Patent Office

Office européen des brevets

(19)

(11) Numéro de publication : **0 494 823 A2**

# (12) DEMANDE DE BREVET EUROPEEN

(21) Numéro de dépôt : **92400049.0**

(22) Date de dépôt : **09.01.92**

(51) Int. Cl.⁵ : **C03B 23/02**

(30) Priorité : **09.01.91 DE 4100409**

(43) Date de publication de la demande :
**15.07.92 Bulletin 92/29**

(84) Etats contractants désignés :
**BE CH DE ES FR GB IT LI LU SE**

(71) Demandeur : **SAINT-GOBAIN VITRAGE INTERNATIONAL**
**"Les Miroirs" 18, avenue d'Alsace**
**F-92400 Courbevoie (FR)**
(84) **BE CH ES FR GB IT LI LU SE**

(71) Demandeur : **VEGLA Vereinigte Glaswerke GmbH**
**Viktoriaallee 3-5**
**W-5100 Aachen (DE)**
(84) **DE**

(72) Inventeur : **D'Iribarne, Benoit**
**5 A Brookroad**
**Brentwool, (Essex), CM 14 4PT (GB)**
Inventeur : **Kuster, Hans-Werner**
**Schervierstrasse 20**
**W-5100 Aachen (DE)**
Inventeur : **Lacoste, Jean-Pierre**
**Grünthalerstrasse 20**
**W-5100 Aachen (DE)**
Inventeur : **Vanaschen, Luc**
**Binsterweg 11.3**
**B-4700 Eupen (BE)**

(74) Mandataire : **Menes, Catherine et al**
**SAINT-GOBAIN RECHERCHE 39, Quai Lucien Lefranc**
**F-93300 Aubervilliers (FR)**

(54) **Procédé et installation de traitement de feuilles de verre chaud.**

(57)     L'invention a pour objet un procédé et une installation de bombage pour la production de vitrages automobiles bombés et trempés comportant un four continu à rouleaux pour réchauffer les feuilles de verre à leur température de bombage.

Cette installation comporte un poste de transfert, disposé à la suite du four continu à rouleaux, comportant des rouleaux de transport prolongeant le chemin défini par les rouleaux du four et un dispositif de prise en charge et éventuellement de bombage des feuilles de verre pour les soulever au-dessus des rouleaux de transport et les déposer sur un cadre se déplaçant à angle droit par rapport à la direction de convoyage desdits rouleaux, une première unité de trempe et éventuellement de bombage pour les feuilles de verre bombées amenées par le cadre et un dispositif de bombage en continu monté à la suite du poste de transfert, dans la direction de convoyage des rouleaux ainsi qu'une seconde unité de trempe, associée au dispositif de bombage en continu, comportant des rouleaux pour convoyer la feuille de verre au travers de cette seconde unité de trempe.

Fig. 4

EP 0 494 823 A2

L'invention concerne le traitement de feuilles de verre chaud, notamment pour la production de vitrages automobiles bombés et trempés.

Un véhicule automobile comporte essentiellement trois types de vitrages qui ont tous en commun de devoir respecter des normes de qualité optique particulièrement sévères et une grande conformité au galbe défini par le constructeur, tant pour ce qui concerne les bords du vitrage qui doit s'intégrer parfaitement dans la carrosserie avec une possibilité éventuelle de montage par collage grâce à un joint ou un cadre moulé autour du vitrage que pour ce qui concerne le reste de la surface, les volumes étant éventuellement appariés pour former des doubles vitrages isolants ou des vitrages composites feuilletés devant plus prosaïquement passer dans une fente étroite.

Ces trois types de vitrages correspondent au pare-brise, à la lunette arrière et aux vitres latérales auxquelles peut être associé le toit ouvrant pour nombre de ces spécificités. Le pare-brise est un vitrage feuilleté de forme généralement complexe avec des courbures transversales et longitudinales. Une lunette arrière est un vitrage assez semblable du point de vue de son galbe mais trempé. Une vitre latérale est également un vitrage trempé mais de forme relativement simple, le plus souvent cylindrique.

A ces trois types de vitrages correspondent trois types d'installations industrielles pour l'opération de bombage. Les feuilles de verre destinées aux pare-brise sont bombées par un procédé d'effondrement, deux feuilles de verre étant déposées à froid sur un cadre de bombage conduit dans un four de réchauffage. Les lunettes arrières sont obtenues par divers procédés évoqués plus loin et se caractérisant tous par un réchauffage des feuilles de verre planes avant l'intervention des outils de bombage qui traitent chaque feuille une à une. Il a été récemment proposé d'utiliser ces mêmes techniques pour bomber une à une des feuilles de verre devant être associées dans un vitrage feuilleté. Les vitres latérales sont encore parfois produites avec des procédés analogues aux procédés utilisés pour les lunettes arrières mais le plus souvent, les techniques mises en oeuvre sont des techniques de bombage en continu par défilement des feuilles de verre réchauffées dans un four sur un lit de conformation formé par une série d'éléments tournants dont la courbure et/ou la disposition selon un trajet à profil courbe, dans la direction de défilement des feuilles de verre définissent la forme conférée à la feuille de verre.

Dans ces installations de bombage en continu, l'outil de bombage n'est jamais monopolisé par une feuille de verre de sorte que les cadences de production obtenues sont très grandes. Mais cette cadence avantageuse et en conséquence le caractère bon marché s'obtient au prix d'une limitation des formes de vitrages susceptibles d'être obtenues qui doivent être essentiellement toriques, cylindre ou tore de révolution mais avec un rayon de courbure secondaire grand par rapport au rayon de courbure principal.

S'il est donc envisageable d'utiliser une seule et même installation pour la production des pare-brise et des lunettes arrières, une installation séparée doit systématiquement être envisagée pour les autres vitrages d'un véhicule automobile. Dans le brevet EP-B1-267 119, il est décrit une installation de bombage qui comporte en ligne un four, un espace apte à recevoir soit des outils de bombage soit des moyens de chauffage se substituant alors auxdits outils de bombage, auquel est associé un poste de trempe et un dispositif de bombage et de trempe annexe, monté dans l'axe du four derrière l'espace recevant les outils de bombage.

Une installation telle que celle décrite dans le brevet mentionné convient bien à une petite unité de production qui ne souhaite pas investir dans un second four, et souhaite néanmoins se réserver la possibilité de modifier à un moindre coût son installation de bombage.

Les auteurs de la présente invention ont trouvé que ce type d'installation mixte pouvait également contribuer à un meilleur fonctionnement du four de réchauffage des feuilles de verre. Le problème ici posé est que de manière connue, un four de réchauffage donne des résultats d'autant plus satisfaisants que son taux de chargement est constant et pour une question économique évidente, aussi élevé que possible. Un tel objectif est très difficile à maintenir dans le cas d'un procédé discontinu et relativement complexe, ne serait-ce que par le nécessaire remplacement de certaines pièces et/ou le réglage des outils de bombage et de trempe.

Le procédé selon l'invention consiste à prévoir un fonctionnement simultané des outils de bombage principaux et des outils de bombage annexes, les feuilles de verre chargées dans le four étant traitées alternativement ou par groupe par l'un ou l'autre des dispositifs de bombage. La ligne de production pourra ainsi fonctionner avec par exemple trois feuilles de verre dirigées vers les outils de bombage annexes de préférence de type continu pour une feuille de verre traitée dans le poste principal de bombage. L'installation travaille avec une occupation optimale du four ce qui permet un meilleur rendement et une plus grande stabilité du four.

Plus généralement l'invention concerne l'association d'au moins deux procédés de travail de feuilles de verre chaud en dérivation sur une sortie d'un four continu, appliquée à une installation comprenant un poste de traitement des feuille de verre opérant selon un fonctionnement discontinu et au moins un second poste de traitement, de préférence placé dans le prolongement du four et opérant de préférence selon un fonctionnement continu.

Le procédé selon l'invention s'applique typiquement à une installation de bombage pour la production de vitrages automobiles bombés et trempés comportant un four continu à rouleaux pour réchauffer les feuilles de verre à leur température de bombage et comportant les caractéristiques suivantes :

* a) - un poste de transfert, disposé à la suite du four continu à rouleaux, comportant des rouleaux de transport prolongeant le chemin défini par les rouleaux du four et un dispositif de prise en charge et éventuellement de bombage des feuilles de verre pour les soulever au-dessus des rouleaux de transport et les déposer sur un cadre se déplaçant à angle droit par rapport à la direction de convoyage desdits rouleaux,

* b) - une première unité de trempe et éventuellement de bombage pour les feuilles de verre bombées amenées par le cadre,

* c) - un dispositif de bombage en continu monté à la suite du poste de transfert, dans la direction de convoyage des rouleaux,

* d) - une seconde unité de trempe, associée au dispositif de bombage en continu, comportant des rouleaux pour convoyer la feuille de verre au travers de cette seconde unité de trempe.

Comme il ressort de la définition donnée plus haut, l'installation constitue une combinaison d'un dispositif de bombage opérant de façon intermittente et d'un dispositif de bombage opérant en continu, ces deux dispositifs étant alimentés par un seul et même four de réchauffage. Avec une telle installation, il est possible de produire et, des vitrages à courbure cylindriques et des vitrages à courbure sphérique soit de façon simultanée ou de façon alternée. L'installation ainsi réalisée étant alors universelle et d'un coût relativement bas.

Pour ce qui concerne le dispositif de bombage en continu, il peut être utilisé une série d'éléments tournants en forme - encore appelés guidons qui, par leur inclinaison, définissent un chemin de plus en plus incurvé dans la direction de défilement des feuilles de verre. Ce dispositif est toutefois de préférence constitué par une machine de bombage comportant un lit de conformation constitué par des tiges conformatrices disposées selon un trajet à profil courbe dans la direction de défilement des feuilles. Ce type de machine est décrit notamment dans les brevets français 2 242 219, 2 549 465 et 2 604 992. La machine de bombage est placée juste dans le prolongement du convoyeur traversant le réchauffage. Ce type de machine est généralement utilisé pour des formes considérées comme relativement simples car essentiellement cylindriques mais en respectant une extrême précision du galbe, les vitrages produits étant souvent destinés aux portières automobiles et devant donc coulisser dans une fente étroite pour faire jouer le dispositif de montée-baisse de la glace.

Chaque machine de bombage correspondant à un rayon de courbure donné, il est généralement prévu pour la déplacer un bâti monté sur roues et immobilisé par des appuis au sol en position de travail.

Le poste de transfert comporte un outil de prise en charge constitué par un élément supérieur de préhension et éventuellement de conformation que nous désignerons par la suite sous le terme "forme supérieure de bombage", suspendu à un dispositif de montée-baisse déplaçable également dans un plan horizontal notamment par rotation selon un axe vertical. De manière bien connue, dans ces techniques de bombage, la forme supérieure de bombage vient saisir la feuille de verre amenée par le convoyeur pour la déposer et/ou la presser sur un élément inférieur que nous désignerons par la suite généralement sous le terme "cadre de bombage".

Ces techniques ont fait l'objet de nombreux perfectionnements dont on trouvera des exemples, notamment dans les publications de brevet FR-B-2 085 464, EP-B-3 391, EP-B-5 306, EP-B-169 770, EP-B-240 418, EP-B-241 355 auxquelles il est renvoyé pour plus de détails.

La déformation requise pour le bombage est obtenue de nombreuses façons qui se différencient notamment par les rôles respectifs de la forme supérieure de bombage et du cadre de bombage. Si la courbure visée est faible, la forme supérieure peut être constituée par une simple plaque plane qui va relâcher la feuille de verre sur un cadre annulaire dont le pourtour définit la forme définitive du vitrage ce qui conduit à un bombage par l'effet de la gravité et de l'énergie cinétique due à la chute de la feuille de verre (EP-B-3 391, EP-B-240 418). Pour une courbure un peu plus prononcée, la forme supérieure sera elle-même galbée afin au minimum de préformer la feuille de verre (FR-B-2 085 464, EP-B-169 770, EP-B-241 355), la feuille de verre finissant le cas échéant d'acquérir sa forme définitive sur le cadre de bombage. Dans les deux cas, ce cadre de bombage fait également office de cadre-support lors de l'opération suivante de trempe.

Si on poursuit cette progression vers des formes de vitrages de plus en plus complexes, une opération de pressage s'avère nécessaire, qui peut être réalisée à l'aide du cadre de trempe et de la forme supérieure de bombage mobile verticalement ou encore au moyen d'un cadre spécifique de pressage, la feuille de verre étant transférée après bombage sur un cadre spécifique de trempe. Enfin, le cadre de pressage peut être constitué non par un simple rail continu mais par une série d'éléments articulés entre eux, le cadre en se refermant venant par exemple ramener les parties latérales de la feuille de verre en direction de la partie centrale. Par ailleurs, il doit être également signalé que cette sophistication est souvent accompagnée par la substitution du cadre inférieur de bombage par une forme pleine de pressage ou autre moyen équivalent destiné notamment à soutenir la partie centrale de la feuille de verre ; toutefois la maîtrise de la qualité optique est alors plus délicate aussi nous nous intéresserons par la suite plus particulièrement aux cas où l'élément inférieur est du type cadre ouvert en son centre.

Le procédé selon l'invention n'est toutefois pas limité aux installations de bombage stricto-sensu. Il peut par exemple être prévu non pas un dispositif de bombage en continu mais un dispositif de trempe en continu de verre plat, le principe étant là encore d'associer, deux ou trois procédés à la sortie d'un même four de réchauffage des feuilles de verre.

D'autres détails et caractéristiques avantageuses de l'invention sont décrites ci-après en référence aux dessins annexés qui représentent :

  * figure 1 : une installation selon l'invention vue de face,
  * figure 2 : une coupe selon la section II-II de la figure 1,
  * figure 3 : une coupe selon la section III-III de la figure 1,
  * figure 4 : un schéma simulant une installation de production opérant selon le procédé faisant l'objet de la présente invention.

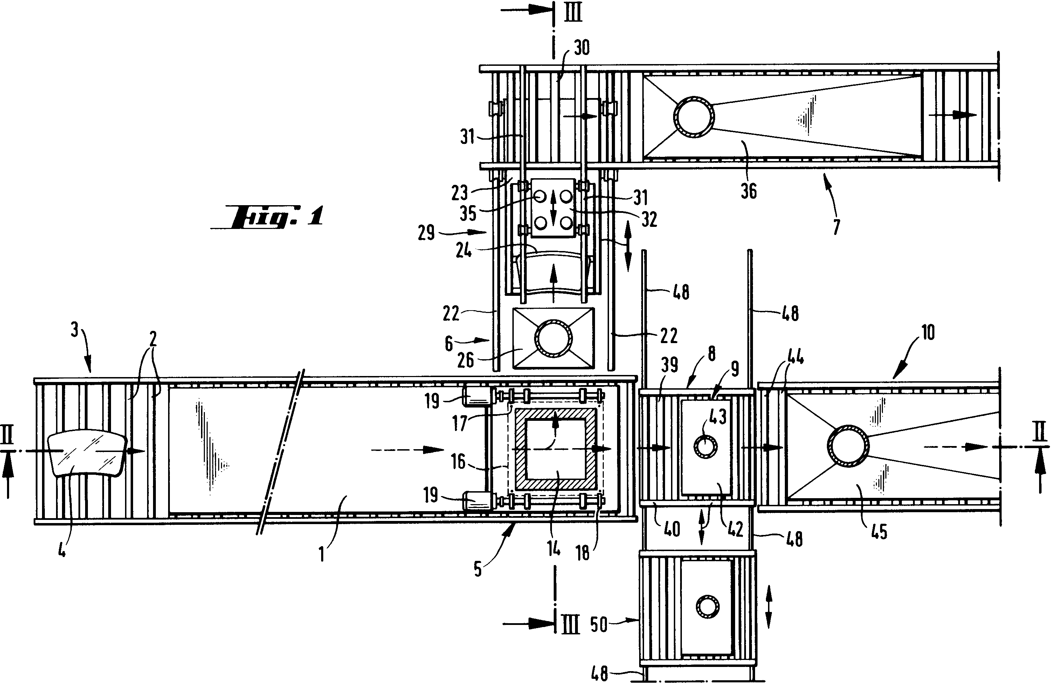

L'installation de production représentée à la figure 1 comporte essentiellement les postes ou unités suivantes. Un four continu 1 avec un convoyeur à rouleaux 2 sur lequel les feuilles de verre sont déplacées à travers le four 1, un poste de chargement 3 dans lequel les feuilles de verre 4 sont déposées sur le convoyeur 2, un poste de bombage et de transfert 5, un poste de trempe 6, disposé à côté du poste de bombage et de transfert 5, auquel est associée une section de refroidissement secondaire 7, un poste de bombage en continu 8 avec un dispositif de trempe 9 intégré, placés derrière le poste de bombage et de transfert 5, une section de refroidissement secondaire 10.

Le poste de transfert 5 est dans le cas présent également un poste de bombage par pressage intermittent. Dans ce but, le poste de transfert 5 comprend une chambre 13 disposée au-dessus des rouleaux 2 et faisant partie du conduit 14. Par ce conduit circule de bas en haut un courant gazeux chaud à une température d'environ 650°C. La pression et le volume du courant d'air chaud ascendant peuvent être ajustés de manière à ce que la feuille de verre 4 soit soulevée au-dessus des rouleaux 2 et pressée contre la forme de bombage 15. La forme de bombage 15 à sa face convexe, à surface pleine, tournée vers le convoyeur à rouleaux 2. Elle est fixée à un cadre 16 qui est monté et descendu par le moteur 19 au moyen de chaînes 17 et de pignons 18. Les appareils de bombage de ce type sont notamment connus du brevet EP-A-169 770.

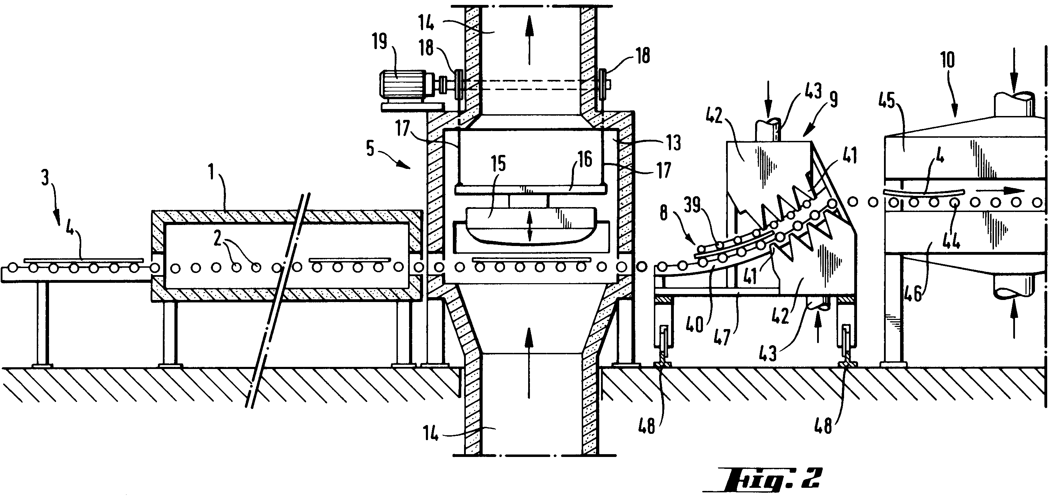

Comme on peut le voir sur les figures 1 et 2, latéralement, le long de la chambre 13, il est prévu des rails 22 montés à angle droit par rapport à la direction de transport du convoyeur 2 et sur lesquels est déplacé un chariot 23 qui porte un cadre 24 dont le pourtour correspond à la forme du vitrage bombé. Pour éviter de surcharger le dessin, le dispositif de commande du chariot 23 n'est pas représenté. Une fois la feuille de verre bombée dans la chambre 13 par pressage contre la forme de bombage 15 à l'aide d'un courant d'air chaud ascendant, le cadre 24 est introduit dans la chambre 13 sous la forme de bombage 15 et la feuille de verre bombée est déposée sur celui-ci en réduisant la pression et le volume du courant d'air chaud. Le chariot 23 peut alors repartir et conduire le cadre 24 portant la feuille de verre jusqu'au poste de trempe 6 constitué de manière conventionnelle de deux caissons de soufflage 26, 27 au moyen desquels la feuille de verre bombée est intensément refroidie par des jets d'air froid et ainsi trempée thermiquement.

A la suite de ce poste de trempe 6, on trouve un nouveau poste de transfert 29 où la feuille de verre bombée et trempée est enlevée de son cadre-support 24 et placée sur un convoyeur à rouleaux 30 qui assure le convoyage des vitrages dans le poste de refroidissement secondaire 7 où leur température est ramenée à une température voisine de la température ambiante. Pour transférer les feuilles de verre du cadre 24 au convoyeur à rouleaux 30, il est prévu des rails 31 montés au-dessus du chariot 23 et sur lesquels est déplacé un chariot 32 portant des ventouses 33 montées à l'extrémité de tiges de piston 34 déplacées verticalement par des vérins 35. Le poste de refroidissement secondaire 7 est formé par des caissons de soufflage 36 et 37 placés sous et au-dessus du convoyeur 30.

Le poste de bombage en continu 8, connecté au poste de transfert 5 et disposé dans l'axe du four et du convoyeur 2 comporte une machine de bombage sur rouleaux avec une série de tiges cylindriques droites 39 positionnées sur un cadre 40 de manière à définir un chemin courbe ascendant, le rayon de courbure du cadre 40 correspondant au rayon de courbure désiré pour le vitrage. Des machines de ce type ont été décrites notamment dans le brevet EP-B-133 114. Dans la partie supérieure de la machine de bombage sont montées des buses à fente 41 qui débouchent entre les rouleaux 39. Ces buses 41, disposées de chaque côté de la bande convoyeuse courbe sont alimentées en gaz de soufflage par des caissons de distribution d'air comprimé 42 alimentés par la conduite 43. Ces buses 41 permettent ainsi une trempe au défilé des feuilles de verre bombées de par la disposition selon un chemin courbe des tiges cylindriques droites 39. A l'extrémité supérieure du convoyeur courbe, les feuilles de verre bombées et trempées basculent sur un convoyeur plan à rouleaux 44 surélevé et passent ensuite à travers le poste de refroidissement secondaire 10 essentiellement constitué par deux caissons de soufflage 45, 46 qui ramènent la température de la feuille de verre à une température proche de l'ambiante.

Comme il ressort de la description faite ci-dessus, les feuilles de verre passent systématiquement par le poste de transfert 5, le courant gazeux chaud ascendant peut ainsi être utilisé pour surchauffer la feuille de verre le cas échéant. En jouant sur la régulation de la température et le volume de courant d'air chaud, il est ainsi possible de choisir des conditions de températures optimales.

La machine de bombage en continu décrite ci-dessus ne permet la production que de vitrages présentant un rayon de courbure donné. Si des vitrages d'un autre rayon de courbure doivent être produits, toute la machine peut être remplacée par une autre adaptée au rayon de courbure désiré. Dans ce but, la machine de bombage est montée toute entière sur un cadre mobile 47 déplacé sur des rails 48, la machine de bombage de remplacement 50 pouvant être montée par avance sur les rails ce qui permet un échange très rapide avec un minimum d'interruption de production.

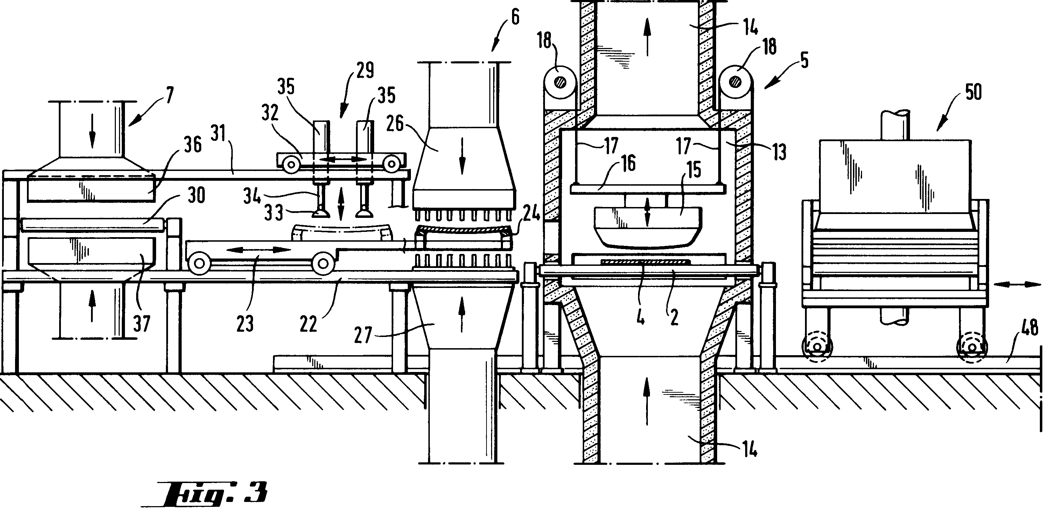

L'installation de production décrite en référence aux figures 1 à 3 peut opérer pendant toute une période de temps comme simple installation de production de vitrages de formes complexes ou inversement comme une simple installation de production en continu de vitrages cylindriques. Mais surtout, cette installation permet l'utilisation simultanée de ces deux installations, avec un bilan économique particulièrement favorable, la production de vitrages cylindriques s'effectuant pratiquement pendant les temps morts de la production des vitrages de formes complexes.

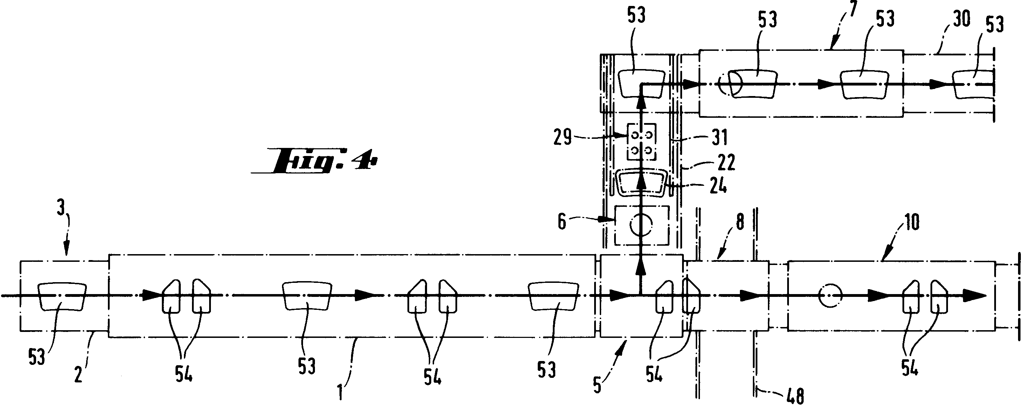

Dans ce cas, il est possible de procéder comme schématisé à la figure 4. Dans le poste de chargement 3 sont introduites en alternance une feuille de verre 53 devant être courbée selon une forme complexe - typiquement une lunette arrière d'un véhicule automobile - et deux feuilles de verre 54 destinées à servir de vitres latérales et devant à ce titre être bombées selon une forme cylindrique. Dans le poste de transfert 5, les feuilles de verre réchauffées dans le four continu 1 sont triées et envoyées vers leurs machines respectives. Les feuilles de verre 53 sont traitées dans le poste de bombage situé dans ou à côté du poste de transfert 5 et sont envoyées grâce au cadre 24 vers le poste de trempe 6 incorporant le caisson de soufflage 26. Après transfert sur le convoyeur à rouleaux 30, la feuille de verre 53 bombée et trempée passe dans le poste de refroidissement secondaire 7. Dès que la feuille de verre 53 a quitté le poste de transfert 5, les feuilles de verre 54 peuvent poursuivre leur chemin en direction de la machine de bombage en continu 8 et de l'unité de refroidissement secondaire 10. Avec un tel fonctionnement simultané des deux dispositifs, on utilise les temps morts de l'installation de bombage en formes complexes, ces temps morts étant essentiellement liés au temps d'occupation du cadre 24 monopolisé pendant la trempe thermique, c'est-à-dire pendant l'opération la plus longue.

A noter que les feuilles de verre 54, destinées à la machine de bombage en continu peuvent avantageusement subir un traitement complémentaire pendant leur passage dans le poste de transfert 5. Il peut être ainsi procédé à un surchauffage comme déjà mentionné. Dans tous les cas, le courant gazeux chaud ascendant, sous basse pression, peut servir à compenser en partie le poids des feuilles de verre de façon à éviter leurs déformations entre les rouleaux dans cette zone où leur température est particulièrement élevée.

## Revendications

1. Installation de bombage pour la production de vitrages automobiles bombés et trempés comportant un four continu à rouleaux pour réchauffer les feuilles de verre à leur température de bombage, **caractérisée en ce qu'**elle comporte :
   * a) - un poste de transfert, disposé à la suite du four continu à rouleaux, comportant des rouleaux de transport prolongeant le chemin défini par les rouleaux du four et un dispositif de prise en charge et éventuellement de bombage des feuilles de verre pour les soulever au-dessus des rouleaux de transport et les déposer sur un cadre se déplaçant à angle droit par rapport à la direction de convoyage desdits rouleaux,
   * b) - une première unité de trempe et éventuellement de bombage pour les feuilles de verre bombées amenées par le cadre,
   * c) - un dispositif de bombage en continu monté à la suite du poste de transfert, dans la direction de convoyage des rouleaux,
   * d) - une seconde unité de trempe, associée au dispositif de bombage en continu, comportant des rouleaux pour convoyer la feuille de verre au travers de cette seconde unité de trempe.

2. Installation de bombage-trempe selon la revendication 1, **caractérisée en ce que** dans le poste de transfert (5) par une plaque aspirante mobile en hauteur et servant au transfert des feuilles de verre des rouleaux (2) au cadre-support (24) positionné au-dessus de ce dernier.

3. Installation de bombage-trempe selon la revendication 2, **caractérisée en ce que** la plaque aspirante peut relâchée la feuille de verre à une certaine hauteur au-dessus du cadre pour un bombage par la gravité et l'énergie cinétique due à la chute de la feuille de verre.

4. Installation de bombage-trempe selon la revendication 1, **caractérisée en ce que** le poste de transfert (5) fait partie d'un conduit vertical (14) dans lequel est montée, au-dessus des rouleaux (2), une forme supérieure pleine, convexe (15) contre laquelle la feuille de verre est pressée pendant que le cadre (24) est introduit sous cette forme supérieure (2).

5. Installation de bombage-trempe selon la revendication 4, **caractérisée en ce que** la forme supérieure (5) est animée également d'un mouvement de montée-baisse et pour venir presser la feuille de verre contre le cadre (24).

6. Installation de bombage-trempe selon l'une des revendications 1 à 5, **caractérisée en ce que** la première unité de trempe (6) est disposée, juste à côté du poste de transfert (5).

7. Installation de bombage-trempe selon l'une des revendications 1 à 6, **caractérisée en ce que** le dispositif de bombage en continu (8) comprend une série d'éléments tournants en forme, de plus en plus incurvés dans la direction de défilement des feuilles de verre.

8. Installation de bombage-trempe selon l'une des revendications 1 à 7, **caractérisée en ce que** le dispositif de bombage en continu (8) comprend une machine de bombage constituée par une série de rouleaux (39) définissant une trajectoire courbe ascendante, dans la direction de défilement des feuilles de verre.

9. Installation de bombage-trempe selon la revendication 7 ou 8, **caractérisée en ce que** la seconde unité de trempe est constituée par des buses ou fentes de soufflage disposées entre les rouleaux cylindriques ou les éléments tournants à l'extrémité de la machine de bombage.

10. Installation de bombage-trempe selon la revendication 7 à 9, **caractérisée en ce que** le dispositif de bombage (8) est construit de manière indépendante et peut être déplacé sur des rails à angle droit par rapport à la direction de défilement des feuilles de verre et être ainsi remplacé.

11. Procédé de traitement de feuilles de verre par une installation comportant une association d'au moins deux installations de traitement de feuilles de verre chaud, en dérivation sur une sortie d'un four continu, **caractérisé en ce que** les deux installations opèrent de façon simultanée.

12. Procédé selon la revendication 11, **caractérisé en ce que** ladite installation comporte un poste de traitement opérant selon un mode discontinu et un poste de traitement opérant selon un mode continu.

*Fig. 1*

EP 0 494 823 A2

Fig. 2

EP 0 494 823 A2

Fig. 3

EP 0 494 823 A2

**Fig. 4**

53   53   7   53   30   53

29 — 31

22

24

6 —

53

3

53

2

54   53   1   54   53   5   54   8   48   10   54